# EUROPÄISCHE PATENTSCHRIFT

(11) **EP 2 946 863 B1**
(45) Veröffentlichungstag und Bekanntmachung des Hinweises auf die Patenterteilung: **19.06.2019**
(21) Anmeldenummer: 14001821.9
(22) Anmeldetag: 23.05.2014
(51) Int. Cl.: B23C 5/10

(54) **ZERSPANUNGSWERKZEUG**
CUTTING TOOL
OUTIL DE COUPE

(43) Veröffentlichungstag der Anmeldung: 25.11.2015
(73) Patentinhaber: Vysoké ucení Technické v Brne, 601 90 Brno (CZ)
(72) Erfinder: Píska, Miroslav, CZ-60200 Brno (CZ); Madaj, Martin, CZ-73904 Ratískovice 394 (CZ)
(74) Vertreter: Malusek, Jiri

(56) Entgegenhaltungen:
- DE-A1-102005 003 496
- US-A1- 2011 211 922
- US-B1- 8 021 085

## Beschreibung

Die Erfindung betrifft eine Schneidegeometrie eines Zerspanungswerkzeugs, dass zumindest eine Schneide an der kegeligen Spitze hat, insbesondere betrifft sie einen einschneidigen Gravierfräser.

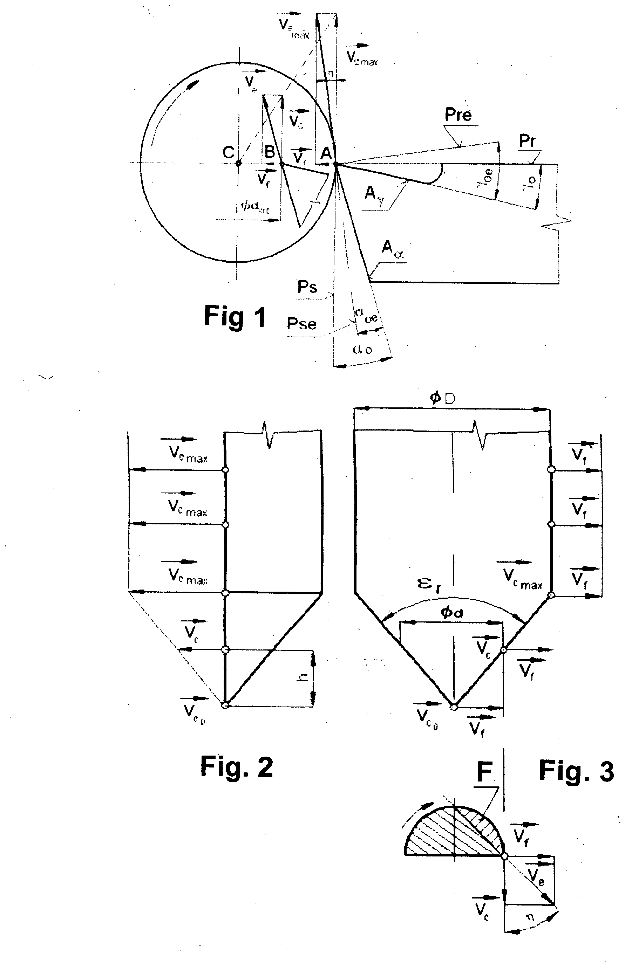

Kompakte einschneidige Fräser mit einer Drehzahl von 10.000 1/min. werden zum Schneiden von Zehntel Millimeter tiefen Rillen in metallischen Oberflächen benutzt. Die Fräser dieser Art haben eine an der kegeligen Spitze des Werkzeugs ausgeschliffene Schneide, wobei die Schneidkante an der Mantellinie des Kegels liegt. Der Spanwinkel bleibt die ganze Länge der Schneide entlang bei 0°. Konstant bleibt sowohl der Freiwinkel, der durch einen Schliff an der kegeligen Fläche des Rückens gebildet ist. Diese Schneidegeometrie im Bereich der Spitze des Fräsers bereitet Probleme, die durch eine Analogie mit einem Abstechmeißel zu erklären sind:
Ein Eindringen eines Abstechmeißels in einen mit einer konstanten Geschwindigkeit drehenden Rundstab ist auf Fig. 1 dargestellt. In diesem Ablaufschema werden Geschwindigkeiten und Winkel in den Punkten **A** und **B** angedeutet, wobei sich der Punkt **C** in der Achse des Rundstabs befindet. Es ist evident, dass sich bei konstanten Drehungen und konstanter Vorschubgeschwindigkeit der Wert und die Richtung des Vektors der effektiven Geschwindigkeit ändern, wobei dieser Vektor ***vₑ*** Summe des Vektors ***v_{c}*** der Umfangsgeschwindigkeit und des Vektors ***v_{f}*** der Vorschubgeschwindigkeit ist. Im Punkt **B**, der sich an dem kritischen Durchmesser ***ϕd** ₖᵣᵢₜ* befindet, liegt der Vektor ***vₑ*** der effektiven Geschwindigkeit bereits in der Ebene ***A_{α}*** des Rückens und der Abstechmeißel beginnt, sich mit dem Rücken an das Werkstück zu lehnen. Im Bereich des Punkts **C** nähert sich die Umfangsgeschwindigkeit der Null, und es kommt hier zu einer starken Interferenz des Rückens mit der bearbeitenden Umfangsfläche des Rundstücks, was zum Verreiben bzw. Bruch des Werkzeugs führen kann. Dies hat auch eine mangelhafte Bearbeitung der Stirnfläche im Bereich der Achse des Rundstücks und einen häufigen Bruch der Spitze des Wergzeugs zur Folge.

Ähnliche Verhältnisse treten bei einem Gravierfräser ein, wenn man entlang der Schneide Richtung Spitze vorgeht. Das ist aus Fig. 2 und Fig. 3 ersichtlich, wo der aktive Teil des Fräsers in Seitenansicht bzw. in Frontansicht dargestellt ist. Die Drehrichtung wird durch einen Pfahl angegeben. Auch wenn der Rücken des Fräsers unter dem Winkel ***η*** hintergearbeitet und ein Teil des Kegels, s. Fläche **F**, abgenommen ist, so liegt der Vektor der effektiven Geschwindigkeit am Durchmesser ***ϕd*** in der Ebene des Rückens, und von dieser Stelle an bis zu der Spitze ist die Zerspanung unzureichend und die Bearbeitung der Rille mangelhaft. Eine eventuelle weitere Vergrößerung des Winkels ***η*** würde aber zu einer unzulässigen Schwächung der Schneide führen.

*Aus* DE 10 2005 003 496 *ist ein Bohrwerkzeug, namentlich ein Spiralbohrer,* gemäß dem Oberbegriff des Anspruchs 1 *bekannt, dessen Hauptschneiden durch Anschleifen von Schutzfasen gebrochen sind. Das Wesen der hier beschriebenen Lösung besteht darin, dass die Größe und*/*oder die Länge und*/*oder die Geometrie der Schutzfase über die Länge der Schneidkante variiert. Die Breite der Schutzfase, am äußeren Ende der Schneidkante von max. 20 µm, nimmt Richtung Kerndurchmesser allmählich ab. Darüber hinaus ändert sich in einigen Ausführungen wesentlich der Fasenwinkel der Schutzfase, und dadurch der Schneidewinkel entlang der Hauptschneidkante. Durch die beschriebene Geometrie der Hauptschneide soll eine höhere Standzeit des Spiralbohrers erreicht werden. Diese Geometrie kann aber nicht auf einen Gravierfräser übertragen werden, bzw. die Qualität des Graviervorgangs erhöhen.*

Der Erfindung liegt die Aufgabe zugrunde, eine Schneidegeometrie eines Zerspanungswerkzeugs, insbesondere eines einschneidigen Gravierfräsers zu entwerfen, die die angeführten Nachteile der bekannten Werkzeuge dieser Art in einem wesentlichen Maß abschaffen würde.

Die gestellte Aufgabe wird erfindungsgemäß durch ein Zerspanungswerkzeug mit zumindest einer Schneide an einer kegeligen Spitze gemäß Anspruch 1 gelöst. Die Schneide ist so geschliffen, dass ein Freiwinkel ***α*** entlang der Schneide von dem äußeren Durchmesser aus Richtung Spitze des Werkzeugs allmählich einen Wert von 0° am *äußeren Durchmesser* bis *zu* 90° *an der Spitze* annimmt, ein Schneidewinkel ***β*** die Werte im Bereich von 60° bis 90° behält und ein *Spanwinkel* **y** in der entgegengesetzten Richtung folgende Werte erreicht: von -90° an der Spitze bis zu einem Wert zwischen 0° und 30° am äußeren Durchmesser. Dabei bleibt die Schneidekante entlang der ganzen Länge im Wesentlichen geradlinig.

Die Erfindung wird nachstehend anhand von einem in den Zeichnungen dargestellten Ausführungsbeispiel eines einschneidigen Gravierfräsers näher erläutert. Es zeigen:
Fig. 1 bis 3 Schemen, die zur Erläuterung des zu lösenden Problems dienen sollen,
Fig. 4 eine Seitenansicht eines Fräsers mit einer Detailansicht der Spitze,
Fig. 5 eine Frontansicht des Fräsers mit 7 zugeordneten senkrechten Schnitten 1-1 bis 7-7, die die Gestaltung der Schneide entlang ihrer Länge sichtbar machen.
Fig. 6 ist eine Ansicht der Spitze des Fräsers in Richtung der Achse des Werkzeugs, wobei die Neigung einzelner Flächen durch Schraffierung sichtbar gemacht ist.

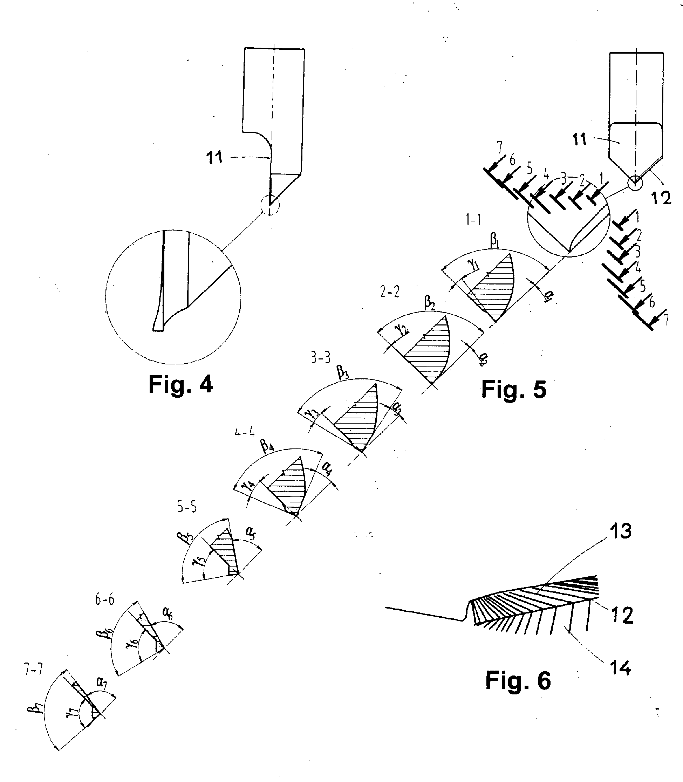

Ein einschneidiger kegeliger Gravierfräser nach Fig. 4 und 5 hat eine, in seinem kegeligen Schneideteil eine geschliffene spezifisch geformte Stirnfläche **11**. Der Fräser ist rechtslaufend. Seine Schneide **12** ist derart ausgeschliffen, wie die Schnitte 1-1 bis 7-7 auf Fig. 5 zeigen. Es ist ersichtlich, dass ein Freiwinkel ***α₁₋₇*** eines Rückens **14** seinen Wert von 0° bis zu 90° entlang der Schneide **12** allmählich ändert, dass ein Schneidewinkel ***β***_{*1-*7} seinen Wert von 90° behält, während ein Spanwinkel ***γ**₁₋₇* in der entgegengesetzten Richtung Werte von - 90° an der Spitze bis zu einem Wert zwischen 0° und 30° am äußeren Durchmesser erreicht. Die Kante der Schneide **12** bleibt entlang der ganzen Länge geradlinig.

Diese Schneidegeometrie berücksichtigt die Kinematik des Fräsens bei den Gravierfräsern und verhindert das Verreiben des Fräsers, eine mangelhafte Bearbeitung des Werkstücks und vorzeitige Beschädigung des Werkzeugs.

## Patentansprüche

1. Zerspanungswerkzeug mit zumindest einer Schneide an einer kegeligen Spitze, wobei die Schneidkante entlang der ganzen Länge im Wesentlichen geradlinig bleibt, **dadurch gekennzeichnet, dass** ein Freiwinkel (α) entlang der Schneide (12) von dem äußeren Durchmesser aus Richtung Spitze des Werkzeugs allmählich einen Wert von 0° *am äußeren Durchmesser* bis *zu* 90° *an der Spitze* annimmt, ein Schneidewinkel (β) die Werte im Bereich von 60° bis 90° behält und ein Spanwinkel (γ) in der entgegengesetzten Richtung Werte von - 90° an der Spitze bis zu einem Wert zwischen 0° und 30° an dem äußeren Durchmesser erreicht.

## Claims

1. Cutting tool with at least one cutting edge in the conical cutting part, wherein the cutting edge remains essentially straight along the whole length, **characterized in, that** along the cutting edge (12) from the outside diameter towards the tip of the tool the back angle (α) gradually takes the value from 0° on the outer diameter to 90° on the tip, the cutting angle (β) reaches the value within 60° up to 90° and the face angle (γ) gradually takes in the opposite direction the value from -90° on the tip up to the value between 0° and 30° on the outer diameter.

## Revendications

1. Outil d'usinage avec au moins une arête de coupe dans la partie coupante conique, le tranchant de l'arête de coupe restant sensiblement linéaire sur toute sa longueur, **caractérisé en ce que** le long de l'arête de coupe (12), à partir du diamètre extérieur vers la pointe de l'outil, l'angle de dépouille (α) atteint progressivement des valeurs allant de 0° sur le diamètre extérieur jusqu'à 90° sur la pointe, l'angle de taillant (β) atteint des valeurs comprises entre 60° et 90° et l'angle de coupe (γ) atteint progressivement dans le sens inverse des valeurs allant de -90° sur la pointe jusqu'à une valeur comprise entre 0° et 30° sur le diamètre extérieur.
